Europäisches Patentamt

European Patent Office

Office européen des brevets

(19)

(11) Veröffentlichungsnummer: **0 211 800**
**A1**

(12) # EUROPÄISCHE PATENTANMELDUNG

(21) Anmeldenummer: 86810204.7

(22) Anmeldetag: 06.05.86

(51) Int. Cl.⁴: **B23H 11/00** , B23H 1/10

(30) Priorität: 28.06.85 CH 2774/85

(43) Veröffentlichungstag der Anmeldung:
25.02.87 Patentblatt 87/09

(84) Benannte Vertragsstaaten:
DE FR GB IT SE

(71) Anmelder: ISTEMA Industrielle Elektrotechnik
und Mechanik AG
Stansstaderstrasse 104
CH-6370 Stans(CH)

(72) Erfinder: Herzog, Peter
Schuelgässli 3
CH-6374 Buochs(CH)
Erfinder: Laubacher, Otto
Hansmatt 7
CH-6370 Stans(CH)

(74) Vertreter: Steiner, Martin et al
c/o AMMANN PATENTANWAELTE AG BERN
Schwarztorstrasse 31
CH-3001 Bern(CH)

(54) **Elektroerosions-Verfahren und Anlage zu dessen Durchführung.**

(57) Zur Bearbeitung von Werkstücken in einer Elektroerosionsmaschine (1) werden mit Werkstücken versehene lose Behälter (4) wechselweise in die Elektroerosionsmaschine (1) eingesetzt, worauf die Pinole (2) mit der Bearbeitungselektrode (3) in den Behälter bzw. den darin befindlichen Elektrolyten und das Werkstück zur Bearbeitung desselben abgesenkt wird. Nach Beendigung der Bearbeitung wird die Elektrode zurückgezogen und der Behälter mit dem bearbeiteten Werkstück rasch gegen einen neuen, mit einem Werkstück versehenen Behälter ausgewechselt. Das Auswechseln von Werkstücken wird damit erheblich vereinfacht und beschleunigt, womit die Stillstandzeiten der Elektroerosionsmaschine entsprechend gesenkt werden können.

FIG.1

## Elektroerosions-Verfahren und Anlage zu dessen Durchführung

Die vorliegende Erfindung betrifft ein Elektroerosions-Verfahren, bei welchem ein Werkstück und ein Elektrolyt in ein oben offenes Gefäss eingebracht werden und das Werkstück mittels einer in das Gefäss abgesenkten Elektrode einer Elektroerosionsmaschine bearbeitet wird. Solche Verfahren werden bisher in Gefässen durchgeführt, welche feste Bestandteile der Elektroerosionsmaschine sind. Die Gefässwand kann mindestens an einer Seite entfernt oder als Türe geöffnet werden, um zu bearbeitende Werkstücke seitlich in das Gefäss einzuführen und dort zu montieren bzw. um bearbeitete Werkstücke aus dem Gefäss zu entfernen. Jeder Werkstückwechsel bedingt hierbei vorerst ein Ablassen des Elektrolyten aus dem Gefäss, das Oeffnen der einen Gefässeite, die Demontage des bearbeiteten Werkstücks, die Reinigung der Montagestelle für das neue Werkstück, das Einsetzen des neuen Werkstücks in genauer Position und das Einlassen des Elektrolyten auf das erforderliche Niveau. Erst dann kann die neue Bearbeitung beginnen. Es ist einleuchtend, dass ein solcher Werkstückwechel umständlich und vor allem zeitraubend ist und verhältnismässig lange Stillstandzeiten der Maschine bedingt, selbst wenn auf Schnellkupplungsteilen in bestimmter Position vormontierte Werkstücke durch einen einfachen Kupplungsvorgang in kurzer Zeit in genau vorbestimmter Position in das Gefäss eingebracht werden können.

Es ist das Ziel vorliegender Erfindung, das Auswechseln von Werkstücken gegenüber dem üblichen Vorgehen erheblich zu vereinfachen und zu beschleunigen. Die Lösung besteht darin, dass Gefässe von der Elektroerosionsmaschine getrennt mit je mindestens einem Werkstück versehen und dann zur Bearbeitung in die Elektroerosionsma - schine eingesetzt werden. Der ganze oben beschriebene verhältnismässig umständliche Vorgang bei jedem Auswechseln eines Werkstückes reduziert sich hierbei im optimalen Falle auf das Auswechseln eines vollständig vorbereiteten Behälters, was eine wesentliche Vereinfachung und Zeitersparnis mit sich bringt. Vorzugsweise können die Elektroerosionsmaschine und die vorhandenen Behälter mit Schnellkupplungsteilen versehen sein, welche ein rasches Aufsetzen eines neuen Behälters in eindeutig vorbestimmter Lage erlaubt. Die Vorbereitung der Behälter ausserhalb der Elektroerosionsmaschine kann auch diesen Vorgang an sich vereinfachen, indem beispielsweise die Pinole mit der Bearbeitungselektrode der Elektroerosionsmaschine den freien Zugang zum Behälter nicht behindert. Es ist dabei auch möglich, allseitig geschlossene und somit einfachere Behälter ohne Seitenwand, die entfernt oder geöffnet werden kann, zu verwenden.

Die Erfindung betrifft auch eine Anlage zur Durchführung des oben erwähnten Verfahrens, welche Anlage im Anspruch 4 umschrieben ist. Vorteilhafte Weiterbildungen des erfindungsgemässen Verfahrens und der. erfindungsgemässen Anlage sind in den abhängigen Ansprüche umschrieben.

Die Erfindung wird nun anhand der Zeichnung näher erläutert, welche Ausführungsbeispiele der erfindungsgemässen Anlage zeigt.

Fig. 1 zeigt ein erstes Ausführungsbeispiel in schematischer Seitenansicht,

Fig. 2 zeigt ein zweites Ausführungsbeispiel in schematischer Seitenansicht,

Fig. 3 zeigt Einzelheiten eines Behälters, der Kupplungsmittel und der hydraulischen Anlageteile für die Zufuhr und Ableitung des Elektrolyten,

Fig. 4 zeigt eine Ausführungsvariante der Anlage und

Fig. 5 zeigt ein Ausführungsbeispiel einer Vorrichtung zur Messung des Durchflusses von Elektrolyt.

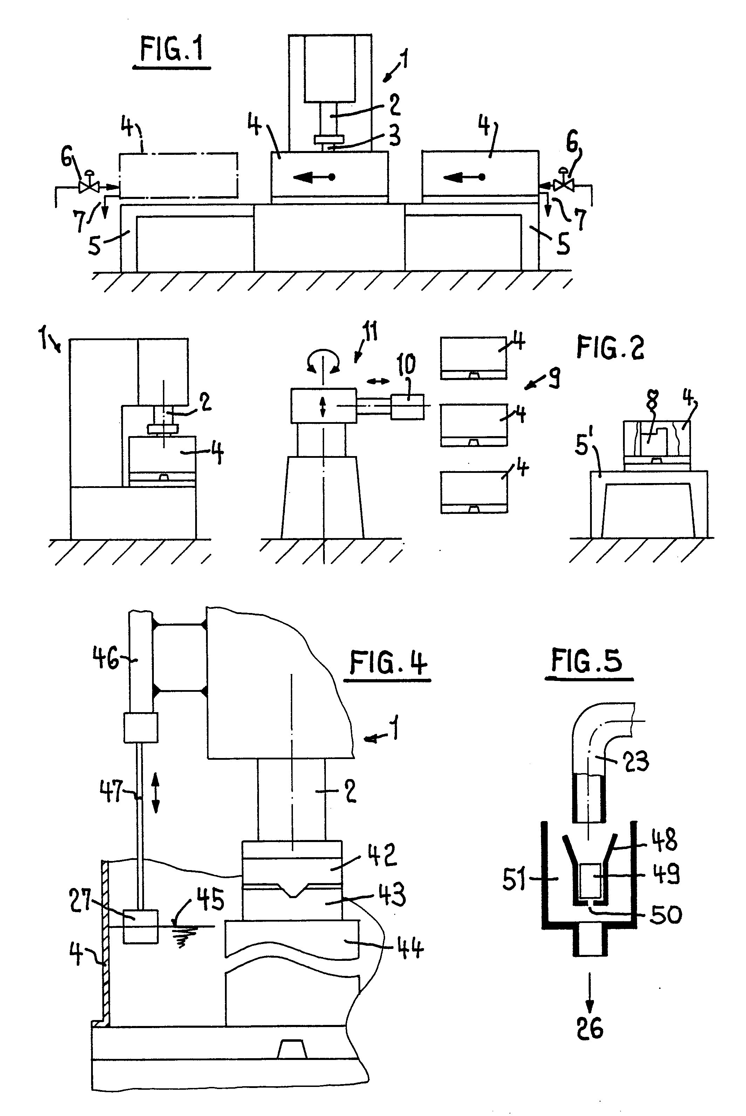

In Fig. 1 ist schematisch die Elektroerosionsmaschine 1 angedeutet. Eine vertikal verstellbare Pinole 2 dieser Maschine dient dazu eine Bearbeitungselektrode 3 in ein oben offenes Gefäss 4 abzusenken und ein darin befindliches, nicht dargestelltes Werkstück zu bearbeiten. Die Bearbeitung erfolgt in einem geeigneten Elektrolyten, der bis zu einem bestimmten vorgeschriebenen Niveau in den Behälter eingefüllt ist. Beidseitig der Elektroerosionsmaschine 1 befindet sich je ein Bestückungsplatz oder eine Einrichtungsstelle 5, auf welcher ein Behälter 4 vorbereitet werden kann. Wie in Fig. 1 schematisch angedeutet, kann an jeder Einrichtungsstelle über einen Hahn 6 Elektrolyt in einer Behälter 4 eingelassen werden. Ebenso ist durch Pfeile 7 angedeutet, dass aus den Behältern Elektrolyt abgelassen werden kann. An den Einrichtungsstellen 5 vorbereitete, mit Werkstücken versehene und mit Elektrolyt gefüllte Behälter können in die Bearbeitungsstellung in die Elektroerosionsmaschine 1 eingeschoben werden, wenn die Pinole 2 mit der Elektrode 3 genügend angehoben ist, und ebenso kann ein Behälter 4 mit einem soeben bearbeiteten Werkstück aus der Maschine 1 in eine leere Einrichtungsstelle 5 verschoben werden. Nachdem ein Behälter 4 mit einem bearbeiteten Werkstück aus der Maschine 1 in eine der Einrichtungsstellen 5 verschoben worden ist, wird vorerst der Elektrolyt aus dem Behälter mindestens teilweise abgelassen, dann wird das Werkstück ausgebaut, die Montagestelle für ein neues Werkstück wird gereinigt, das neue Werkstück wird eingesetzt und fixiert, und dann wird über den Hahn 6 neuer Elektrolyt bis zum vorgeschriebenen Niveau aufgefüllt. Zur Montage des Werkstückes kann hierbei eine Schnellkupplung mit hochpräzisen Kupplungsteilen zur Verbindung des Werkstücks mit dem Behälter in eindeutig vorbestimmter Lage verwendet werden, um die Montagezeit abzukürzen. Inzwischen ist in der Maschine 1 ein Werkstück fertig bearbeitet worden, worauf der dort befindliche Behälter in die andere jetzt leere Einrichtungsstelle verschoben wird, um das Werkstück auszuwechseln, während der mit einem neuen Werkstück versehene Behälter eingeschoben und in der Maschine 1 fixiert wird, worauf die Bearbeitung beginnen kann. Auch die Verbindung jedes Behälters 4 mit dem Montagetisch der Elektroerosionsmaschine 1 kann mittels geeigneter Schnellkupplungen mit hochpräzisen Kupplungsteilen erfolgen.

Derartige Schnellkupplungen sind beispielsweise in der USA-Patentschrift 3 271 848 beschrieben. Es ist daher in der Elektroerosionsmaschine 1 kein Nachjustieren der Werkstücke erforderlich, weil sie schon in der Einrichtungsstelle in ganz bestimmter Position im Behälter montiert werden, worauf dieser Behälter wiederum in eindeutig vorbestimmter Position in der Maschine 1 fixiert wird. Gegebenenfalls können die Behälter auch in den Einrichtungsstellen 5 mittels gleichartiger Schnellkupplungen in eindeutig bestimmter Lage aufgespannt sein, in welchem Falle die Positionierung des Werkstückes im Behälter 4 nicht bezüglich dieses Behälters, sondern bezüglich fester Referenzen an der Einrichtungsstelle orientiert werden kann.

Es leuchtet ein, dass die vollständige Vorbereitung der Behälter 4 in den Einrichtungsstellen inklusive genaue Positionierung der Werkstücke eine erhebliche Vereinfachung und Beschleunigung des Auswechselns von bearbei teten gegen neue Werkstücke bei minimalen Stillstandzeiten der Elektroerosionsmaschine 1 erlaubt.

Fig. 2 zeigt eine weitere Ausführungsmöglichkeit der Anlage. Es ist eine einzige Einrichtungsstelle 5 ' vorhanden, in welcher Behälter 4 mit Werkstücken 8 in der oben beschriebenen Weise vorbereitet werden. Die vorbereiteten Behälter gelangen dann in ein Zwischenlager oder Magazin 9, aus welchem sie mittels eines Greifers 10 einer Transfereinrichtung 11 entnommen und in die Elektroerosionsmaschine 1 eingesetzt werden. Die Behälter 4 sind in diesem Falle palettenartig ausgebildet, d.h., sie sind so gestaltet, dass sie vom Greifer 10 ergriffen, transportiert und in der Elektroerosionsmaschine eingesetzt werden können. Ein ähnliches Palettensystem, allerdings für eine andersartige Elektroerosionsmaschine ist in der EP-A-O 117 557 beschrieben. Während die Anlage nach Fig. 2 eher für kleinere Gefässe geeignet ist, kommt die Anlage nach Fig. 1 eher für grössere Gefässe bzw. Werkstücke in Frage.

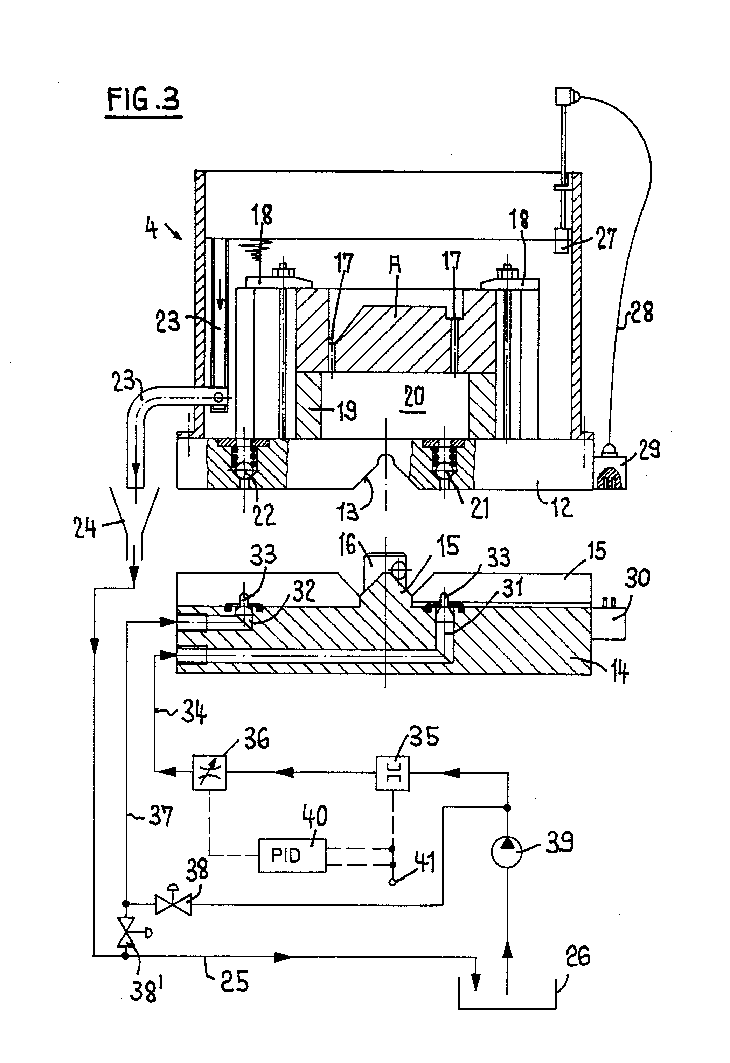

Fig. 3 zeigt Einzelheiten eines Behälters 4, einer Schnellkupplung für denselben, eines hydraulischen Anlageteils zur Steuerung der Elektrolytzufuhr und einer Messvorrichtung zur Ueberwachung der Anlage. Der Boden des Gefässes 4 ist als Schnellkupplungsteil 12 mit kreuzweise angeordneten, genau bearbeiteten, prismatischen Nuten 13 ausgebildet. Ein entsprechender Kupplungsteil 14 mit genau bearbeiteten, entsprechenden, kreuzweise angeordneten Prismen 15 ist auf dem in Fig. 3 nicht dargestellten Tisch der Erosionmaschine befestigt. Der Teil 14 weist ferner einen Spannbolzen 16 auf, in welchen bei vereinigten Teilen 12 und 14 ein Spannexcenter eingesetzt werden kann, um durch Drehung dieses Exzenters die Teile 12 und 14 spielfrei in genau bestimmter Position gegeneinander zu pressen. Bei grösseren Gefässen können unter Umständen mehrere Spannmittel bzw. Spannstellen gleichmässig über die Fläche verteilt vorgesehen sein. Wie erwähnt, sind derartige hochpräzise Schnellkupplungen beispielsweise in der USA-PS 3 271 848 beschrieben, und sie bedürfen keiner weiteren Erläuterung. Ein Werkstück 16 mit Bohrungen 17 ist mittels Briden 18 auf einen Trägerring 19 aufgespannt. Das Werkstück, der Ring 19 und der Boden des Behälters bzw. der Kupplungsteil 12 umschliessen einen Raum 20, in welchen sowohl die beiden Bohrungen 17 des Werkstückes als auch ein Rückschlagventil 21 münden. Ein weiteres im Teil 12 angeordnetes Rückschlagventil 22 mündet ausserhalb des Ringes 19 in das Gefäss 4.

Am Gefäss 4 ist ein Ablaufrohr 23 vorgesehen, dessen äusserer Teil ausserhalb des Kupplungsteils 12 in einen Trichter 24 mündet, von dem überlaufender Elektrolyt durch eine schematisch angedeutete Leitung 25 zum Vorratsbehälter 26 zurückfliessen kann. Im Behälter 4 ist auch eine Messonde 27 montiert, welche zugleich die Temperatur des Elektrolyten sowie dessen Niveau kontrolliert. Bei Anstieg der Temperatur über eine bestimmte Grenze oder Anstieg des Elektrolyten über das gewünschte Niveau, beispielsweise im Falle einer Verstopfung des Ablaufrohres 23 wird die Maschine abgeschaltet und/oder ein Alarm ausgelöst bzw. die Elektrolytzufuhr wird unterbrochen. Die Steuerung erfolgt über ein Kabel 28 sowie Kupplungsstecker 29 bzw. 30 an den Teilen 12 bzw. 14.

Im Teil 14 sind Eintrittskanäle 31 und 32 für Elektrolyt vorgesehen. In die Mündungen dieser Kanäle sind Stifte 33 eingebaut, welche bei vereinigten Kupplungsteilen 12 und 14 die Rückschlagventile 21 und 22 öffnen. Der Zufuhrkanal 31 ist verbunden mit einer Zuleitung 34, in der eine Messblende 35 und ein Regelventil 36 liegen. Der Zufuhrkanal 32 steht in Verbindung mit einer Leitung 37, in welcher ein Ventil 38 liegt. Beide Leitungen kön nen durch eine Pumpe 39 aus dem Behälter 26 gespeist werden. Die Messblende 35 liefert ein für die Durchflussmenge charakteristisches Signal an einen Durchflussregler 40, dessen Ausgang das Ventil 36 steuert. Ueber einen Sollwerteingang 41 kann der Regler 40 nach einem bestimmten Programm gesteuert werden oder aber die Zufuhr von Elektrolyt kann unterbrochen werden.

Wie bereits angedeutet, werden die Rückschlagventile 21 und 22 beim Einsetzen des Behälters in die Elektroerosionsmaschine durch die Stifte 33 geöffnet, sobald die Kupplungsteile 12 und 14 vereinigt sind. Zugleich erfolgt der Anschluss des Messfühlers 27 über das Kabel 28 und die Verbindungsstecker 29 und 30 zur Steuerschaltung der Maschine. Nach erfolgtem Aufsetzen und Festspannen des Behälters wird die Pumpe 39 eingeschaltet und der Hahn 38 geöffnet, womit der Behälter über die Leitung 37 und das Rückschlagventil 22 rasch mit Elektrolyt gefüllt wird. Dann wird die Bearbeitungselektrode abgesenkt und die Bearbeitung beginnt. Dabei ist angenommen, dass auch eine Nachbearbeitung der Bohrungen 17 erfolge. Das bedingt eine dauernde Spülung dieser Bohrungen durch von unten über die Leitung 34, das Rückschlagventil 21 und den Raum 20 dauernd zugeführten Elektrolyten. Wie erwähnt, kann dabei die Durchflussmenge nach einem bestimmten Programm während der Bearbeitung geregelt werden. Sie kann aber auch auf einen festen Wert eingestellt sein, in welchem Falle ebenfalls eine Regelung auf diesen Wert erfolgt. Ueberschüssiger Elektrolyt fliesst dauernd durch das Ueberlaufrohr 23 und die Leitung 25 zurück zum Behälter 26. Ist die Bearbeitung beendet, so kann das Gefäss bei abgestellter Pumpe 39 über ein Ventil 38' entleert werden. Es ist aber auch möglich, das den Elektrolyten noch enthaltene Gefäss sofort vom Kupplungsteil 14 zu lösen und aus der Elektroerosionsmaschine in eine Einrichtungsstelle zu bringen, wo der Elektroloyt abgelassen und das Werkstück ausge wechselt wird. Während bereits ein anderes Gefäss mit einem neuen Werkstück in die Elektroerosionsmaschine eingesetzt worden ist.

Fig. 4 zeigt eine weitere Ausführungsvariante. An der Pinole 2 der Elektroerosionsmaschine ist mittels einer Schnellkupplung der oben beschriebenen Art mit den Kupplungsteilen 42 und 43 eine Bearbeitungselektrode 44 angebracht, die ein nicht dargestelltes Werkstück in dem bis zum Niveau 45 eingefüllten Elektrolyten bearbeitet. Am Bearbeitungskopf der Elektroerosionsmaschine 1 ist ein Hubzylinder 46 befestigt, welcher an seiner Stange 47 einen Messfühler 27 der oben anhand der Fig. 3 beschriebenen Art trägt, der das Niveau und die Temperatur des Elektrolyten überwacht. Zum Auswechseln des Gefässes 4 wird sowohl die Pinole 2 mit der Bearbeitungselektrode 44 als auch der Messfühler 27 mittels des Zylinders 46 über den Rand des Gefässes angehoben, sodass dieses seitlich entfernt bzw. nachträglich ein anderes Gefäss mit einem neuen Werkstück eingeführt werden kann.

Fig. 5 zeigt eine Variante eines Messfühlers zur Erfassung des Durchflusses des Elektrolyten. Das Ueberlaufrohr 23 mündet in diesem Falle in einen Trichter 48, in dem ein Schwimmer 49 über einer Oeffnung 50 im Boden des Trichters 48 angeordnet ist. Der Trichter befindet sich in einem Auffanggefäss 51, aus welchem der Elektrolyt zum Gefäss 26 (Fig. 3) geleitet wird. Je nach der Durchflussmenge von Elektrolyt steigt der Schwimmer 49 im Trichter 48 mehr oder weniger hoch, in dem sich an der Oeffnung mehr oder weniger Flüssigkeit staut, und über einen Schalter oder einen Kontinuilerlich arbeitenden Fühler kann die Durchflussmenge erfasst und geregelt werden. An der gleichen Stelle kann auch die Temperatur des Elektrolyten gemessen werden.

Es sind verschiedene weitere Varianten möglich. Ein Ge fäss gemäss Fig. 3 kann natürlich auch in der Einrichtungs-oder Bestückungsstelle auf ein Kupplungsteil entsprechend dem Kupplungsteil 14 aufgespannt sein, und gegebenenfalls könnte auch dort im Teil 14 ein Zuleitungskanal 32 mit dem entsprechenden Betätigungsstift 33 vorgesehen sein, wenn der Behälter in der Einrichtungsstelle gefüllt und entleert werden soll. Natürlich kann auch am Boden des Gefässes ein Schnellkupplungsteil ähnlich dem Teil 14 fest montiert sein, mit welchem mit einem komplentären Kupplungsteil versehene Werkstücke schnell in vorbestimmter Lage gekuppelt werden können. Es können auch andere Mittel zur Verbindung je eines Behälters mit der Elektroerosionsmaschine vorgesehen sein. So kann beispielsweise an der Maschine ein Halter mit Schwalbenschwanznut vorgesehen sein, in welche eine komplementäre Schwalbenschwanzführung des als Palette ausgebildeten Behälters bis zu einem Anschlag eingeschoben werden kann. Es können in einem Behälter auch mehrere Werkstücke zugleich befestigt werden, die in der Elektroerosionsmaschine durch mehrere Elektroden bearbeitet werden.

## Ansprüche

1. Elektroerosions-Verfahren, bei welchem ein Werkstück und ein Elektrolyt in ein oben offenes Gefäss eingebracht werden und das Werkstück mittels einer in das Gefäss abgesenkten Elektrode einer Elektroerosionsmaschine bearbeitet wird, dadurch gekennzeichnet, dass Gefässe (4) von der Elektroerosionsmaschine (1) getrennt mit je mindestens einem Werkstück versehen und dann zur Bearbeitung in die Elektroerosionsmaschine eingesetzt werden.

2. Verfahren nach Anspruch 1, dadurch gekennzeichnet, dass Werkstücke in bestimmter Lage in Gefässe und Gefässe (4) mittels präziser Schnellkupplungen in bestimmter Lage in der Elektroerosionsmaschine befestigt werden, derart, dass die genaue Lage der Werkstücke bezüglich der Elektrode (3) ausserhalb der Elektroerosionsmaschine (1) vorbestimmt wird.

3. Verfahren nach Anspruch 1 oder 2, dadurch gekennzeichnet, dass der Elektrolyt in das ausserhalb der Elektroerosionsmaschine (1) befindliche Gefäss (4) eingelassen wird.

4. Anlage zur Durchführung des Verfahrens nach Anspruch 1, mit einer Elektroerosionsmaschine, dadurch gekennzeichnet, dass an der Elektroerosionsmaschine (1) wahlweise anbringbare Gefässe (4) vorgesehen sind, in deren Innerem Werkstücke montiert werden können, wobei an der Elektroerosionsmaschine (1) und an den Gefässen (4) Schnellkupplungsteile (14 bzw. 12) zum Anbringen je eines Gefässes (4) in vorbestimmter Lage in der Elektroerosionsmaschine (1) vorhanden sind.

5. Anlage nach Anspruch 4, dadurch gekennzeichnet, dass die Gefässe (4) palettenartig mit Organen zum Erfassen derselben durch Transportmittel (10) ausgebildet sind.

6. Anlage nach Anspruch 4 oder 5, dadurch gekennzeichnet, dass die Gefässe (4) mit Anschlüssen (21,22) zum Einlassen und Ablassen des Elektrolyten versehen sind.

7. Anlage nach einem der Ansprüche 4-6, dadurch gekennzeichnet, dass die Schnellkupplungsteile (12,14) auch mindestens einen Anschluss (21,22; 31,32) aufweisen.

8. Anlage nach einem der Ansprüche 4-7, dadurch gekennzeichnet, dass an den Gefässen - (4) Messvorrichtungen, z.B. Temperatur-und Niveaufühler (27), angebracht sind, und dass die Schnellkupplungsteile (12,14) auch kuppelbare elektrische Anschlüsse (29,30) für die Messvorrichtungen aufweisen.

9. Anlage nach einem der Ansprüche 4-7, dadurch gekennzeichnet, dass an der Elektroerosionsmaschine (1) eine in das Gefäss - (4) absenkbare Messvorrichtung (27) vorgesehen ist.

10. Anlage nach einem der Ansprüche 4-9, dadurch gekennzeichnet, dass ein-oder beidseitig der Elektroerosionsmaschine (1) Einrichtungsstellen (5) zur Vorbereitung von Gefässen (4) vorgesehen sind, wobei Gefässe (4) zwischen der Elektroerosionsmaschine (1) und der oder den Einrichtungsstellen (5) verschoben werden können.

11. Anlage nach einem der Ansprüche 1-9, dadurch gekennzeichnet, dass ein Magazin (9) für vorbereitete Gefässe (4) vorgesehen ist, aus welchen Gefässe mittels einer Transportvorrichtung - (10,11) in die Elektroerosionsmaschine überführbar sind.

12. Anlage nach einem der Ansprüche 4-11, dadurch gekennzeichnet, dass der Ueberlauf (23) des Gefässes (4) in einen Durchflussmesser (48-51) mündet.

FIG.1

FIG.2

FIG.4

FIG.5

## FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| A | PATENTS OF ABSTRACTS, Band 8, Nr. 177, 15. August 1984, Seite 31 M 317; & JP-A-59 69 222 (MAKINO FURAISU SEISAKUSHO K.K.) 19-04-1984 | 1 | B 23 H 11/00 B 23 H 1/10 |
| A | CH-A- 400 408 (ATELIERS DES CHARMILLES) * Seite 1, Zeilen 8-31 * | 1 | |

RECHERCHIERTE SACHGEBIETE (Int. Cl.4)

B 23 H

Der vorliegende Recherchenbericht wurde für alle Patentansprüche erstellt.

| Recherchenort | Abschlußdatum der Recherche | Prüfer |
|---|---|---|
| DEN HAAG | 26-09-1986 | DAILLOUX C. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82